Europäisches Patentamt

European Patent Office

Office européen des brevets

(11) Veröffentlichungsnummer: **0 188 790**
**A2**

# (12) EUROPÄISCHE PATENTANMELDUNG

(21) Anmeldenummer: 85116355.0

(22) Anmeldetag: 20.12.85

(51) Int. Cl.⁴: **G01D 5/16**

(30) Priorität: 24.12.84 DE 3447327

(43) Veröffentlichungstag der Anmeldung:
30.07.86 Patentblatt 86/31

(84) Benannte Vertragsstaaten:
BE DE FR GB IT SE

(71) Anmelder: **International Standard Electric
Corporation
320 Park Avenue
New York New York 10022(US)**
Anmelder: **Standard Elektrik Lorenz
Aktiengesellschaft
Lorenzstrasse 10
D-7000 Stuttgart 40(DE)**

(72) Erfinder: **Meyer, Hans Peter
Maxplatz 32
D-8500 Nürnberg(DE)**
Erfinder: **Becker, Helmut, Dr.
Noriker Strasse 19
D-8500 Nürnberg(DE)**

(74) Vertreter: Hösch, Günther, Dipl.-Ing. et al
c/o Standard Elektrik Lorenz AG Patent- und
Lizenzwesen Kurze Strasse 8 Postfach 300 929
D-7000 Stuttgart 30(DE)

(54) **Magnetfelddetektor.**

(57) Ein Magnetfelddetektor mit einer in einem Gehäuseteil -
(2) vorgesehenen Magnetfeldsensoranordnung (3) aus wenigstens einem auf einem Träger (5) angeordneten magnetfeldabhängigen Widerstand (4) und einem hinter diesem angeordneten Permanentmagneten (7) ist die Magnetfeldsensoranordnung (3) wenigstens annähernd in der Mitte oder
seitlich versetzt im Gehäuseteil (2) angeordnet und zu beiden
Seiten oder auf einer Seite des Permanentmagneten (7) sind
neben diesem mehrere elektrische Kontaktteile (8) im
Gehäuseteil (2) befestigt, deren Außenanschlüsse (11) als
Löt- oder insbesondere als Steckkontakte ausgebildet sind
und deren Innenanschlüsse (10) sind mit den magnetfeldabhängigen Widerständen (4) verbunden.

Fig.2

EP 0 188 790 A2

Magnetfelddetektor

Die vorliegende Erfindung bezieht sich auf einen Magnetfelddetektor gemäß dem Oberbegriff des Anspruchs 1.

Ein Magnetfelddetektor der genannten Art ist bekannt aus der DE-OS 24 26 420. Dort ist der Magnet von einem U-förmigen Joch umgeben, auf dessen Mittelschenkel der Magnet mit seinem einen Pol aufliegt. Auf dem anderen Pol sind nebeneinander zwei magnetfeldabhängige Halbleiterwiderstände angeordnet, beispielsweise aufgeklebt und auf diesen liegt eine das Magnetfeld steuernde weichmagnetische Folie verschiebbar auf. Über die Art der Kontaktierung der magnetfeldabhängigen Halbleiterwiderstände sind dort keine Angaben vorhanden.

Mit der vorliegenden Erfindung soll die Aufgabe gelöst werden, einen Magnetfeldsensor der genannten Art so auszubilden, daß er in einfacher Weise in eine gedruckte Schaltung einsetzbar und/oder mittels einer Steckverbindung kontaktierbar ist.

Erfindungsgemäß wird dies durch die im Kennzeichen des Anspruchs 1 angegebenen Merkmale gelöst. Hierdurch ist eine in-line oder dual-in-line Kontaktierung oder eine Kontaktierung mit einer Steckkupplung möglich.

Weitere vorteilhafte Ausgestaltungen der Erfindung sind in den Unteransprüchen angegeben und nachfolgend anhand der in der Zeichnung dargestellten Ausführungsbeispiele beschrieben. Dabei zeigen:

Fig. 1 eine Ansicht von unten,

Fig. 2 eine Ansicht der Fig. 1 von der Seite,

Fig. 3 eine Ansicht einer anderen Ausführung von unten,

Fig. 4 eine Ansicht der Fig. 3 von der Seite teilweise im Schnitt,

Fig. 5 eine Ansicht von oben und

Fig. 6 eine Ansicht der Fig. 5 von der Seite.

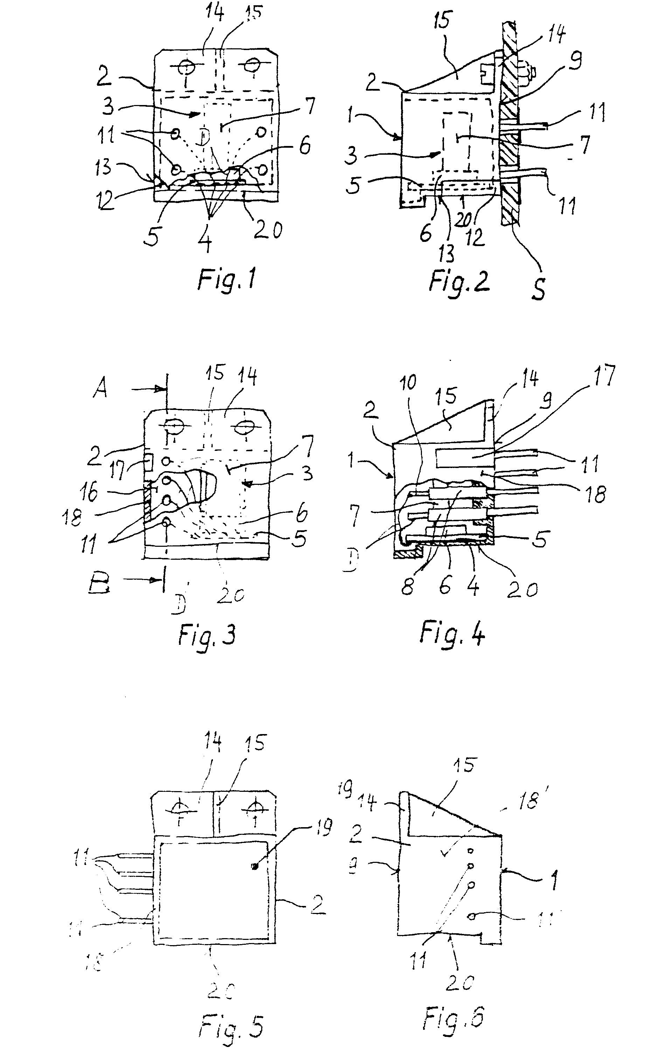

In einem zumindest einseitig beispielsweise an der Oberseite 1 offenen Gehäuse oder Gehäuseteils 2 ist in Fig. 1 in der Ansicht von unten gesehen, zumindest annähernd in der Mitte eine Magnetfeldsensoranordnung 3 vorgesehen. Diese besteht aus einem mit magnetfeldabhängigen Widerständen 4 versehenen Träger, der vorzugsweise aus Glas oder Keramik besteht, und einer dahinter angeordneten Polplatte 6 aus weichmagnetischem Material und einem daran anschließenden Permanentmagneten 7. Der Permanentmagnet 7 liegt mit seinem einen magnetischen Pol an der Polplatte 6 an. Ggf. kann auf eine Polplatte 6 verzichtet werden. Der Träger 5 liegt mit den magnetfeldabhängigen Widerständen unmittelbar oder mittelbar beispielsweise über eine Folie oder eine Isolierschicht an der Innenseite der einen als Detektorseitenwand 20 ausgebildeten Gehäusewand an.

Neben dem Permanentmagneten 7 sind ein- oder beidseitig mehrere, insbesondere beidseitig je zwei elektrische Kontaktteile 8 im Gehäuseteil 2, hier im Boden 9, befestigt. Die Befestigung erfolgt beispielsweise durch Einstecken oder Einformen in ein Gehäuseteil 2 aus Kunststoff oder Keramik oder durch isolierende Anordnung in einem Gehäuseteil 2 aus Metall, insbesondere aus Aluminium.

Durch diese Art der Anordnung gemäß den Fig. 1 und 2 erhält man im Gehäuseteil 2 genügend Platz im Bereich jedes Kontaktteiles 8, so daß die magnetfeldabhängigen Widerstände 4 auch bei Miniaturausführungen von Magnetfeldsensoren noch leicht mit den Innenanschlüssen der Kontaktteile 8 über Drähte D kontaktierbar sind.

Die Außenanschlüsse 11 der Kontaktteile 8 sind als Lötanschlüsse oder insbesondere als Steckanschlüsse und hierbei vorzugsweise als Flachsteckanschlüsse ausgebildet. Hierdurch kann der Magnetfelddetektor mit dual-in-line-Anschlüssen ausgerüstet sein.

Die Außenanschlüsse 11 können außerdem noch derart unsymmetrisch angeordnet sein, daß ein unverwechselbares Einstecken in eine gedruckte Schaltungsplatine S und/oder Zusammenstecken mit einer Steckerkupplung möglich ist. Letzteres kann auch dadurch erreicht werden, daß am Gehäuseteil 2 eine Aussparung 12 beispielsweise an einer Kante 13, vorgesehen ist, in die ein entsprechendes Gegenstück, beispielsweise ein Stift an einem Kupplungsstecker, eingreifen kann. Es ist auch möglich, einen Vorsprung, beispielsweise eine Nase oder einen Stift, vorzusehen, der in eine Aussparung einer gedruckten Schaltung oder einer Stekkerkupplung 1 greifen kann.

An einer Seitenwand des Gehäuseteils 2, insbesondere in Verlängerung derselben, kann ein Befestigungsflansch 14 angebracht sein. Zur Verstärkung desselben kann noch eine Versteifungsrippe 15 vorgesehen werden.

Gemäß dem Ausführungsbeispiel nach Fig. 3 und 4 kann die Magnetfeldsensoranordnung 3 auch etwas seitlich versetzt angeordnet sein. Die Kontaktteile 8 sind dann in dem seitlichen vergrößerten Raum 16 ein- oder zwei- oder mehrreihig angeordnet, so daß eine in-line- oder eine dual-in-line-Ausführung möglich ist. Auch hierbei können wieder die Außenanschlüsse 11 so angeordnet sein, daß ein unverwechselbares Aufstecken einer Steckerkupplung etc. möglich ist und/oder es kann am Gehäuseteil 2 eine entsprechende Anordnung, beispielsweise eine Aussparung 17 an einer Seitenwand 18 vorgesehen sein, in die ein Stift einer Steckerkupplung eingreifen kann.

Beim Ausführungsbeispiel gemäß den Fig. 1 bis 4 sind die Kontaktteile 8 im Boden 9 des Gehäuseteils 2 angebracht. Sie können jedoch auch an einer anderen an die Detektorseitenwand 20 angrenzende Seitenwand 18' des Gehäuseteils 2 vorgesehen sein, wie die Fig. 5 und 6 zeigen. Auch hier ist die Magnetfeldsensoranordnung 3 zweckmäßig seitlich versetzt im Gehäuseteil 2 angebracht. Das Gehäuseteil 2 ist mit Vergußmasse 19 gefüllt, wie in Fig. 5 angedeutet. Bei diesem Beispiel sind die Kontaktteile 8 und die Anschlüsse 11 unsymmetrisch angeordnet, indem der eine Außenanschluß 11' einen etwas größeren Abstand von dem benachbarten Außenanschluß 11 aufweist. Er könnte auch, ggf. zusätzlich, seitlich versetzt angeordnet sein.

Unter Umständen ist es zweckmäßig, daß die Außenanschlüsse 11 auf der Seite aus dem Gehäuseteil 2 herausragen, die als Auflagefläche bei der Befestigung des Magnetfelddetektors dient.

Diese Anordnung eignet sich insbesondere für magnetfeldabhängige Widerstände, die während oder nach dem Herstellungsprozeß durch ein derartiges Magnetfeld behandelt wurden, daß die leichte Richtung in Streifenrichtung verläuft, d.h. daß sie eine einachsige Anisotropie in Richtung parallel zu den Streifen der streifenförmig ausgebildeten magnetfeldabhängigen Widerstände aufweisen. Solche Streifen bestehen vorzugsweise aus ferromagnetischem Material, wie z.B. NiFe, CoFeB, FeB etc und die Schichtstärke derselben ist nicht größer als 0,5μm.

**Ansprüche**

1. Magnetfelddetektor mit einer in einem Gehäuseteil vorgesehenen Anordnung aus wenigstens einem auf einem Träger angeordneten magnetfeldabhängigen Widerstand und einem hinter diesen angebrachten Permanentmagneten, **dadurch gekennzeichnet**, daß die Anordnung (3) wenigstens annähernd mittig oder seitlich versetzt im Gehäuseteil (2) angeordnet ist und zu beiden Seiten oder auf einer Seite des Permanentmagneten (7) neben diesem mehrere elektrische Kontaktteile (8) im Gehäuseteil (2) befestigt sind, deren Außenanschlüsse (11) als Löt- oder insbesondere als Steckkontakte ausgebildet sind und deren Innenanschlüsse (10) mit dem magnetfeldabhängigen Widerständen (4) verbunden sind.

2. Magnetfelddetektor nach Anspruch 1, dadurch gekennzeichnet, daß die Steckanschlüsse als Flachstecker ausgebildet sind.

3. Magnetfelddetektor nach Anspruch 1 oder 2, dadurch gekennzeichnet, daß die Außenanschlüsse (11) derart unsymmetrisch angeordnet sind, daß der Magnetfelddetektor mit den Außenanschlüssen (11) in nur einer definierten Lage in eine Schaltungsplatte (S) einsetzbar oder mit einer Kupplung zusammensteckbar ist.

4. Magnetfelddetektor nach einem der Ansprüche 1 bis 3, dadurch gekennzeichnet, daß an Gehäuseteilen (2) wenigstens eine Kante (13) und/oder Wand (18) und/oder der Boden (9) eine Ausnehmung (12; 17) und/oder einen Vorsprung aufweist, die bzw. der mit einem gegengleichen Kupplungsteil nur in einer definierten Lage zusammensetzbar ist bzw. sind.

5. Magnetfelddetektor nach einem der Ansprüche 1 bis 4, dadurch gekennzeichnet, daß das Gehäuseteil (2) mit Vergußmasse ausgegossen ist und diese auch die Innenanschlüsse (10) umschließt.

6. Magnetfelddetektor nach einem der Ansprüche 1 bis 5, dadurch gekennzeichnet, daß die Kontaktteile (8) in einer der Detektorseitenwand (20) benachbarten Gehäusewand - (18) angeordnet sind.

7. Magnetfelddetektor nach einem der Ansprüche 1 bis 6, dadurch gekennzeichnet, daß eine Gehäusewand (18) mit einem Befestigungsflansch (14) versehen ist, mit dem der Magnetfelddetektor auf einer Unterlage (S) befestigbar ist.

8. Magnetfelddetektor nach Anspruch 7, dadurch gekennzeichnet, daß die Außenanschlüsse (11) auf der Auflageseite des Befestigungsflansches (14) aus dem Gehäuseteil - (2) herausragen.

9. Magnetfelddetektor nach einem der Ansprüche 1 bis 8, dadurch gekennzeichnet, daß die magnetfeldabhängigen Widerstände aus parallel zueinander angeordneten Streifen aus ferromagnetischem Material mit einer maximalen Schichtdicke von 0,5 μm bestehen, die durch ein Magnetfeld so behandelt sind, daß die leichte Richtung parallel zu den Streifen verläuft.

Fig.1

Fig.2

Fig. 3

Fig. 4

Fig. 5

Fig.6